# EUROPÄISCHE PATENTSCHRIFT

(11) **EP 1 485 284 B1**
(45) Veröffentlichungstag und Bekanntmachung des Hinweises auf die Patenterteilung: **18.05.2005**
(21) Anmeldenummer: 03744356.1
(22) Anmeldetag: 13.03.2003
(51) Int. Cl.: B62D 5/065, B62D 5/06

(54) **HILFSKRAFTLENKUNG MIT HYDRAULISCHER HILFSKRAFTUNTERSTÜTZUNG**
HYDRAULIC POWER-ASSISTED STEERING
DIRECTION ASSISTEE HYDRAULIQUEMENT

(30) Priorität: 15.03.2002 DE 10211396
(43) Veröffentlichungstag der Anmeldung: 15.12.2004
(73) Patentinhaber: ZF Lenksysteme GmbH, 73527 Schwäbisch Gmünd (DE)
(72) Erfinder: MERZ, Johann, 73527 Schwäbisch Gmünd (DE)
(86) Internationale Anmeldenummer: PCT/EP2003/002585
(87) Internationale Veröffentlichungsnummer: WO 2003/078236

(56) Entgegenhaltungen:
- DE-A- 19 752 397
- DE-A- 19 829 531
- GB-A- 2 305 898

## Beschreibung

Die Erfindung betrifft eine Hilfskraftlenkung mit hydraulischer Hilfskraftunterstützung, insbesondere für Kraftfahrzeuge mit einer Druckmittelpumpe zur Erzeugung eines hydraulischen Drucks.

Eine gattungsgemäße Hilfskraftlenkung ist aus der DE 198 29 531 A1 bekannt.

Zum weiteren Stand der Technik wird ferner auf die DE 197 52 397 A1 verwiesen.

Die gattungsgemäße Schrift zeigt eine Hilfskraftlenkung mit hydraulischer Hilfskraftunterstützung für Kraftfahrzeuge, wobei eine mit einem Lenkhandrad versehene Lenkspindel mit einem Eingangsglied eines Lenkgetriebes verbunden ist. Ein Ausgangsglied des Lenkgetriebes ist mit zu lenkenden Rädern des Kraftfahrzeuges verbunden. Zwei Arbeitsräume eines Servomotors einer Hilfskrafteinrichtung sind entsprechend einem anstehenden Drehmoment im Bereich Lenkspindel/Eingangsglied über ein Lenkventil von einer Servopumpe mit Druckmittel beaufschlagt. Die Servopumpe bzw. die Druckmittelpumpe wird dabei durch den Verbrennungsmotor angetrieben.

Zwei Sensoren zum Erfassen eines Drehwinkels und eines Drehmomentes sind gemäß der gattungsgemäßen Schrift an der Lenkspindel bzw. an dem Ausgangsglied des Lenkgetriebes angeordnet. Sowohl die Größe und die Richtung der hydraulischen Hilfskraftunterstützung als auch die Rückstellung der zu lenkenden Räder werden über ein gemeinsames, elektronisch gesteuertes Elektromagnetventil gesteuert. Zum Erfassen der Lenkkraft ist ein Drehmomentsensor vorhanden.

Die gattungsgemäße Hilfskraftlenkung stellt eine Weiterentwicklung der vorbekannten Hilfskraftlenkungen, wie beispielsweise aus der EP 0 440 638 B1 bekannt, dar.

Durch die gattungsgemäße Hilfskraftlenkung ist eine Hilfskraftunterstützung durch einfache Mittel möglich. Darüber hinaus wird die Lenkpräzision verbessert.

Der vorliegenden Erfindung liegt die Aufgabe zugrunde, die bekannten Hilfskraftlenkungen weiter zu verbessern, insbesondere eine weitere Optimierung bezüglich einer energetisch vorteilhaften Funktionsweise zu schaffen.

Diese Aufgabe wird erfindungsgemäß durch die Merkmale von Anspruch 1 gelöst.

Dadurch, dass die Druckmittelpumpe von dem Motor mittels einer Kupplung trennbar ist, kann die Druckmittelpumpe in bestimmten Fahrsituationen in energetisch günstiger Weise von dem Motor getrennt werden. In Versuchen hat sich dabei herausgestellt, dass sich sowohl die CO₂-Emissionen als auch der Kraftstoffverbrauch reduziert. In vorteilhafter Weise ist eine Trennung dann möglich, wenn keine Lenkbewegung erfolgt, d.h. wenn keine hydraulische Unterstützung benötigt wird. Dies kann z.B. bei geraden Autobahnstücken oder dergleichen der Fall sein.

Wie sich in Versuchen herausgestellt hat, reduziert ein Abtrennen der Druckmittelpumpe vom Motor den Gesamtverbrauch, insbesondere bei großvolumigen Druckmittelpumpen, spürbar.

Dadurch, dass das Elektromagnetventil in der Druckmittelpumpe integriert ist, lassen sich in vorteilhafter Weise kurze Leitungslängen und ein daraus resultierender geringer hydraulischer Widerstand realisieren. Die sich infolgedessen ergebenden energetischen Vorteile wirken sich vorteilhaft auf die Hilfskraftlenkung aus. Dadurch ist es insbesondere auch möglich, direkt beteiligte Elemente ebenfalls optimiert und daran angepasst kostengünstig auszugestalten. Wie sich in Versuchen gezeigt hat, lässt sich eine Integration des Elektromagnetventiles in die Druckmittelpumpe einfach und kostengünstig durchführen. Da es sich bei der erfindungsgemäßen Vorrichtung um ein Massenproduktionsteil handelt, kommen kostensenkenden Maßnahmen eine nicht unerhebliche Bedeutung zu.

Im Vergleich zu bisher bekannten Hilfskraftlenkungen mit hydraulischer Hilfskraftunterstützung lässt sich die erfindungsgemäße Lösung wesentlich günstiger mit einem geringeren mechanischen Aufwand herstellen. Auftretende Geräusche, die sich gegebenenfalls bis in das Fahrzeuginnere erstrecken können, werden deutlich reduziert bzw. eliminiert.

Wie sich in Versuchen ebenfalls herausgestellt hat, verbessert sich durch die Integration des Elektromagnetventiles in die Druckmittelpumpe das Lenkgefühl und die Lenkpräzision. In vorteilhafter Weise reduziert sich die Baugröße, der eine erhebliche Bedeutung, insbesondere bei einem Einsatz in Kraftfahrzeugen, zukommt, erheblich.

Von Vorteil ist es, wenn die Kupplung als elektromagnetische Kupplung ausgebildet ist.

Die Kupplung kann in einer derartigen Ausgestaltung schnell und dynamisch auf Veränderungen reagieren und somit flexibel eingesetzt werden.

Erfindungsgemäß kann ferner vorgesehen sein, dass die Kupplung in der Druckmittelpumpe integriert oder an der Druckmittelpumpe angeordnet ist.

Die Anordnung der Kupplung an der Druckmittelpumpe oder eine Integration in die Druckmittelpumpe ermöglicht eine kompakte und kostengünstig zu realisierende Ausgestaltung. Die notwendigen Anschlussteile werden auf ein Minimum verringert und somit die baulichen Maßnahmen optimiert.

Erfindungsgemäß kann vorgesehen sein, dass das Elektromagnetventil über eine Recheneinheit steuerbar ist, wobei die Recheneinheit Signale von wenigstens einem Lenkmomentsensor verarbeitet und die Recheneinheit zur Steuerung des Elektromagnetventiles ebenfalls den Servoöldruck zu den Arbeitsräumen verarbeitet.

Anhand der Signale des Lenkmomentsensors, d.h. anhand des vom Fahrer vorgegebenen Lenkwunsches, und des Servoöldrucks zu den Arbeitsräumen, steuert die Recheneinheit das Elektromagnetventil, so dass die gewünschte hydraulische Unterstützung erzielt wird. Jedem durch die Lenkhandhabe vorgegebenen Lenkmoment kann somit in einfacher Weise eine hydraulische Unterstützung zugeordnet werden. Dabei wird der vorhandene Servoöldruck entsprechend berücksichtigt.

Das Elektromagnetventil kann über die Recheneinheit auch auf einfache Weise in Abhängigkeit von zusätzlichen Parametern, wie beispielsweise der Fahrgeschwindigkeit des Fahrzeuges, der Lenkgeschwindigkeit, der Giergeschwindigkeit, des Beladezustandes, der Motordrehzahl, der ESP- bzw. ABS-Signale, des Lenkwinkels oder weiterer fahrerindividueller Einstellungen, gesteuert werden.

Durch eine geeignete Programmierung der Recheneinheit und einer entsprechenden Sensorik kann das: Elektromagnetventil durch Signale gesteuert werden, die Auskunft über die derzeitige Position des Fahrzeugs und über gewünschte, zukünftige Positionen geben. Damit ist die Option für ein automatisches Lenken in der Hilfskraftlenkung enthalten.

Der Lenkmomentsensor kann zweckmäßigerweise als Druckkraftsensor oder als Piezo-Element ausgebildet sein. Mit solchen Elementen kann der Steuerweg auf 0° bis 0,1° reduziert werden.

Vorteilhafte Ausgestaltungen der Erfindung ergeben sich aus den weiteren Unteransprüchen und aus dem nachfolgend anhand der Zeichnung prinzipmäßig dargestellten Ausführungsbeispiel.

Es zeigt:
- Fig. 1: eine Prinzipdarstellung einer erfindungsgemäßen Hilfskraftlenkung in einer ersten Ausgestaltung mit einer separat von der Druckmittelpumpe angeordneten Kupplung und einem Elektromagnetventil mit offener Mitte; und
- Fig. 2: eine Prinzipdarstellung einer erfindungsgemäßen Hilfskraftlenkung in einer zweiten Ausgestaltung mit einer in die Druckmittelpumpe integrierten Kupplung und einem Elektromagnetventil mit geschlossener Mitte.

Hilfskraftlenkungen mit hydraulischer Unterstützung sind bereits hinreichend bekannt, wobei auf die DE 198 29 531 A1 verwiesen wird, weshalb nachfolgend lediglich auf die erfindungsgemäß relevanten Merkmale näher eingegangen wird.

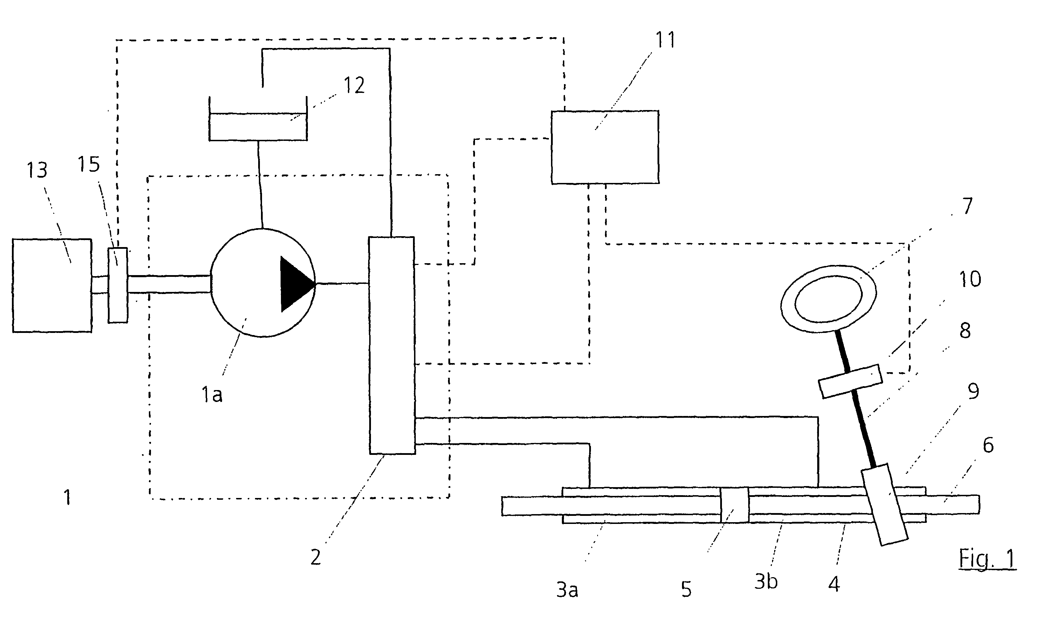

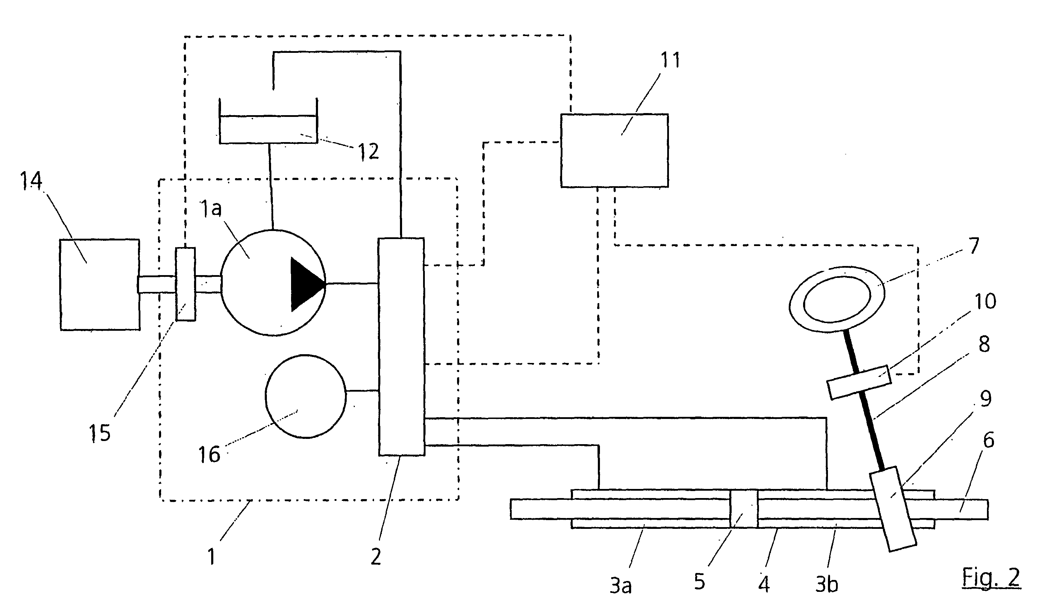

Fig. 1 und Fig. 2 zeigen eine Hilfskraftlenkung für Kraftfahrzeuge mit einer Druckmittelpumpe 1, in die ein Elektromagnetventil 2 integriert ist. Die Druckmittelpumpe 1 weist somit neben der üblichen Druckmittelpumpeneinrichtung 1a ein Elektromagnetventil 2, das in dem dargestellten Ausführungsbeispiel als Proportionalmagnetventil ausgebildet ist, auf.

Die Druckmittelpumpe 1 mit dem integrierten Elektromagnetventil 2 steuert einen Druckmittelstrom zu zwei Arbeitsräumen 3a, 3b. Die Arbeitsräume 3a, 3b können dabei in bekannter Weise durch ein Gehäuse 4 gebildet werden, in dem ein Arbeitskolben 5, der die Arbeitsräume 3a, 3b voneinander trennt, angeordnet ist. Der Arbeitskolben 5 ist dabei im allgemeinen mit einer Zahnstange 6 verbunden. Ein vom Fahrer mittels einer Lenkhandhabe 7 vorgegebener Lenkwunsch wirkt dabei über eine Lenkspindel 8 auf ein Antriebsritzel 9, das in Wirkverbindung mit der Zahnstange 6 steht.

Der vom Fahrer mittels der Lenkhandhabe 7 vorgegebene Lenkwunsch wird von einem Lenkmomentsensor 10 erfasst und an eine Recheneinheit 11 übertragen. Die Recheneinheit 11 berücksichtigt bzw. verarbeitet zur Steuerung des Elektromagnetventiles 2 auch den Servoöldruck zu den Arbeitsräumen 3a bzw. 3b. Das Elektromagnetventil 2 wird somit anhand des ermittelten Lenkmomentes und des Servoöldruckes angesteuert. Dadurch, dass auch der Servoöldruck erfasst und berücksichtigt wird, ergibt sich ein vorteilhaftes Lenkgefühl.

In dem in Fig. 1 dargestellten Ausführungsbeispiel entspricht der Servoöldruck dem Pumpendruck. In dem in Fig. 2 dargestellten Ausführungsbeispiel, das ein Elektromagnetventil 2 mit geschlossener Mitte zeigt, kann der Pumpendruck unterschiedlich zu dem Servoöldruck zu den Arbeitsräumen 3a, 3b sein. Die Steuerung des Elektromagnetventiles 2 durch entsprechende Signale der Recheneinheit 11 sowie die Erfassung des Servoöldruckes ist in den beiden Ausführungsbeispielen jeweils durch zwei gestrichelt dargestellte Linien verdeutlicht. Die Verbindung bzw. die Signalübertragung von dem Lenkmomentsensor 10 zu der Recheneinheit 11 ist ebenfalls durch eine gestrichelte Linie in den beiden Ausführungsbeispielen symbolisiert.

Die Recheneinheit 11 wird mittels einem nicht dargestellten CAN-Bus mit zusätzlichen Parametern versorgt. Die Recheneinheit 11 kann zur Steuerung des Elektromagnetventils 2 außerdem zusätzliche Parameter, wie die Fahrgeschwindigkeit, die Lenkgeschwindigkeit, Beschleunigungen, die Giergeschwindigkeit, den Beladungszustand, die Motordrehzahl, ESP-Signale, ABS-Signale, den Lenkwinkel sowie fahrerindividuelle Einstellungen verarbeiten. Anhand dieser Parameter und den Signalen des Lenkmomentsensors 10, der in vorteilhafter Weise als Piezo-Element ausgebildet sein kann, steuert die Recheneinheit 11 das Elektromagnetventil 2.

Der Lenkmomentsensor 10 kann alternativ auch als Lenkmoment- und Winkelsensor ausgebildet sein bzw. einen Drehmomentsensor darstellen.

Anhand der Signale der Recheneinheit 11 steuert das Elektromagnetventil 2 den Druckmittelstrom zu den Arbeitsräumen 3a bzw. 3b derart, dass der vom Fahrer mittels der Lenkhandhabe 7 vorgegebene Lenkwunsch hydraulisch unterstützt wird. Die Druckmittelpumpe 1 ist in bekannter Weise mit einem Druckmittelspeicher 12 verbunden.

Die Druckmittelpumpe 1 wird durch einen Motor angetrieben, der in dem in Fig. 1 dargestellten Ausführungsbeispiel als Elektromotor 13 ausgebildet ist. Erfindungsgemäß kann der Motor, wie in dem in Fig. 2 dargestellten Ausführungsbeispiel vorgesehen, jedoch auch als Verbrennungsmotor 14 ausgebildet sein.

Von Vorteil ist es, wenn die Leistung der Druckmittelpumpe 1 in Abhängigkeit der für die hydraulische Unterstützung notwendigen Leistung regelbar ist.

Das in den Figuren dargestellte Ausführungsbeispiel lässt sich lenkungsseitig alternativ auch als "Steer by Wire"-Lenkung oder als Überlagerungslenkung (AFS) ausgestalten.

Der Lenkmomentsensor 10 bzw. gegebenenfalls auch weitere Sensoren und die Recheneinheit 11 können vorzugsweise redundant ausgeführt sein.

Das Elektromagnetventil 2 kann mit einer offenen hydraulischen Mitte (Durchlaufsystem) gemäß Fig. 1 oder mit einer geschlossenen hydraulischen Mitte (Speichersystem) gemäß Fig. 2 ausgebildet sein. Je nach Einsatzfall ergeben sich aus diesen Ausgestaltungen in bekannter Weise entsprechende Vorteile.

Wie aus den Figuren ersichtlich, ist zwischen der Druckmittelpumpe 1 und dem Verbrennungsmotor 14 bzw. dem Elektromotor 13 eine Kupplung 15 angeordnet. Die Druckmittelpumpe 1 ist somit von dem Verbrennungsmotor 14 bzw. dem Elektromotor 13 trennbar.

Wie sich in Versuchen herausgestellt hat, reduzieren sich dadurch die CO₂-Emissionen und der Kraftstoffverbrauch. Dies resultiert daraus, dass in Fahrsituationen, in denen keine Lenkbewegung notwendig ist, d.h. wenn keine hydraulische Unterstützung benötigt wird, die Druckmittelpumpe 1 von dem Verbrennungsmotor 14 bzw. dem Elektromotor 13 trennbar ist.

Die Kupplung 15 kann mittels der Recheneinheit 11 gesteuert werden und hierzu mit dieser korrespondieren (siehe gestrichelt dargestellte Verbindungslinie in den Figuren).

Eine Ausgestaltung der Kupplung 15 als elektromagnetische Kupplung hat sich hierfür als besonders geeignet herausgestellt. Die Kupplung 15 kann somit schnell und dynamisch auf Veränderungen reagieren. Von Vorteil ist es außerdem, wenn die Kupplung 15, wie in Fig. 2 schematisch dargestellt, in der Druckmittelpumpe 1 integriert oder an der Druckmittelpumpe 1 angeordnet ist. Eine Anordnung der Kupplung 15 an der Druckmittelpumpe 1 kann beispielsweise auf bzw. an dem Pumpengehäuse erfolgen. Die Anordnung der Kupplung 15 an dem Pumpengehäuse bzw. eine Integration in die Druckmittelpumpe 1 läßt sich kompakt und kostengünstig realisieren. In Fig. 1 ist schematisch eine Anordnung der Kupplung 15 außerhalb der Druckmittelpumpe 1 dargestellt.

Aus Fig. 2 ist ferner ersichtlich, dass ein Hydraulikspeicher 16, der für ein Elektromagnetventil 2 mit geschlossener Mitte sinnvoll ist, ebenfalls in der Druckmittelpumpe 1 integriert sein kann. Somit ist eine vorteilhafte kompakte Anordnung ohne unnötige Leitungen bzw. Leitungsanschlüsse möglich. Dichtigkeitsprobleme bzw. aufwendige Montagearbeiten werden dadurch vermieden.

In alternativen Ausführungsformen kann, falls eine besonders kompakte Ausführungsform der Druckmittelpumpe 1 vorteilhaft erscheint, der Hydraulikspeicher 16 auch separat, d.h. nicht in der Druckmittelpumpe 1 integriert, ausgebildet sein.

Bezüglich einer erfindungsgemäßen Ausgestaltung einer Hilfskraftlenkung mit einer Kupplung, hat sich das in Fig. 2 dargestellte Ausführungsbeispiel (Elektromagnetventil 2 mit geschlossener Mitte) als besonders geeignet herausgestellt. Besonders geeignet erscheint es auch, wenn die Kupplung 15 außenseitig auf dem Gehäuse der Druckmittelpumpe 1 befestigt ist. Hierbei kann auf bekannte Befestigungsarten, wie sie beispielsweise aus der Praxis bei Klimaanlagen in Kraftfahrzeugen bekannt sind, zurückgegriffen werden.

Durch den bei Elektromagnetventilen 2 mit geschlossener Mitte sinnvollerweise vorhandenen Hydraulikspeicher 16 kann, selbst bei geöffneter Kupplung 15, eine gewisse Lenkbewegung gewährleistet werden. Dadurch kann die Druckmittelpumpe 1 häufiger von dem Verbrennungsmotor 14 abgetrennt werden, woraus die bereits beschriebenen energetischen Vorteile resultieren. Eine Kombination der Kupplung 15 mit dem Verbrennungsmotor 14 des Kraftfahrzeugs hat sich dabei als besonders geeignet herausgestellt. Auf einen separaten Elektromotor kann somit verzichtet werden.

Durch die Kupplung 15 kann in einfacher Weise der Druck im Hydraulikspeicher 16 gesteuert werden. Dabei kann vorgesehen sein, dass die Kupplung 15 beim Erreichen eines unteren Druckniveaus bzw. eines unteren Druckpunktes im Hydraulikspeicher schließt und den Hydraulikspeicher 16 somit wieder auflädt. Beim Erreichen eines oberen Druckniveaus bzw. eines oberen Druckpunktes kann die Kupplung 15 analog wieder geöffnet werden, wodurch die Druckmittelpumpe 1 vom Verbrennungsmotor 14 oder dem Elektromotor 13 getrennt wird. Der obere Druckpunkt kann z.B. zwischen 120 und 140 bar, vorzugsweise 130 bar, liegen und der untere Druckpunkt 5 bis 20 bar, vorzugsweise 10 bar darunter. Somit ist eine vorteilhafte Druckregelung bzw. eine einfache und kostengünstige Steuerung der Druckmittelpumpe 1 möglich. Vorteilhaft erscheint eine Steuerung der Kupplung 15 bzw. eine Druckerfassung und Auswertung durch die Recheneinheit 11.

Die Kupplung 15 kann somit anhand der Druckwerte im Hydraulikspeicher 16 gesteuert werden.

Selbstverständlich lässt sich die erfindungsgemäße Kupplung 15 sowohl mit beiden Arten von Elektromagnetventilen 2 als auch mit beiden Motorkonzepten 13, 14 kombinieren.

Der Rücklauf der ausgelenkten Fahrzeugräder in die Geradeausfahrt kann durch eine zusätzliche Logik erfolgen bzw. unterstützt werden. Die bereits erwähnten Parameter, die die Recheneinheit 11 verarbeitet, können hierfür zur Steuerung herangezogen werden.

In vorteilhafter Weise kann das Elektromagnetventil 2 beispielsweise im Deckel der Druckmittelpumpe 1 oder in einer Gehäuseerweiterung angeordnet sein. Konstruktiv sind hierbei verschiedene Lösungen möglich und realisierbar.

## Patentansprüche

1. Hilfskraftlenkung mit hydraulischer Hilfskraftunterstützung, insbesondere für Kraftfahrzeuge mit
1.1 einer Druckmittelpumpe (1) zur Erzeugung eines hydraulischen Drucks für die Hilfskraftunterstützung,
1.2 einem Elektromagnetventil (2) zur Steuerung des Druckmittelstromes zu Arbeitsräumen (3a,3b), wobei das Elektromagnetventil (2) in der Druckmittelpumpe (1) angeordnet ist, und
1.3 einem Motor (13 bzw. 14) zum Antreiben der Druckmittelpumpe (1), wobei die Druckmittelpumpe (1) von dem Motor (13 bzw. 14) mittels einer Kupplung (15) trennbar ist.

2. Hilfskraftlenkung nach Anspruch 1,
**dadurch gekennzeichnet, dass**
die Kupplung (15) als elektromagnetische Kupplung ausgebildet ist.

3. Hilfskraftlenkung nach Anspruch 1 oder 2,
**dadurch gekennzeichnet, dass**
die Kupplung (15) in der Druckmittelpumpe (1) integriert oder an der Druckmittelpumpe (1) angeordnet ist.

4. Hilfskraftlenkung nach Anspruch 1, 2 oder 3,
**dadurch gekennzeichnet, dass**
der Motor als Verbrennungsmotor (14) ausgebildet ist.

5. Hilfskraftlenkung nach einem der Ansprüche 1 bis 4,
**dadurch gekennzeichnet, dass**
das Elektromagnetventil (2) ein Ventil mit geschlossener hydraulischer Mitte ist.

6. Hilfskraftlenkung nach einem der Ansprüche 1 bis 5,
**dadurch gekennzeichnet, dass**
das Elektromagnetventil (2) als Proportionalmagnetventil ausgebildet ist.

7. Hilfskraftlenkung nach einem der Ansprüche 1 bis 6,
**dadurch gekennzeichnet, dass**
das Elektromagnetventil (2) über eine Recheneinheit (11) steuerbar ist, wobei die Recheneinheit (11) Signale von wenigstens einem Lenkmomentsensor (10) verarbeitet.

8. Hilfskraftlenkung nach Anspruch 7,
**dadurch gekennzeichnet, dass**
die Recheneinheit (11) zur Steuerung des Elektromagnetventils (2) den Servoöldruck zu den Arbeitsräumen (3a,3b) verarbeitet bzw. erfasst.

9. Hilfskraftlenkung nach Anspruch 7 oder 8,
**dadurch gekennzeichnet, dass**
die Recheneinheit (11) zur Steuerung des Elektromagnetventils (2) zusätzliche Parameter, wie Fahrgeschwindigkeit, Lenkgeschwindigkeit, Beschleunigungen, Giergeschwindigkeit, Beladungszustand, Motordrehzahl, ESP-Signale, ABS-Signale, Lenkwinkel sowie fahrerindividuelle Einstellungen verarbeitet.

10. Hilfskraftlenkung nach Anspruch 9,
**dadurch gekennzeichnet, dass**
die zusätzlichen Parameter von einem CAN-Bus übertragbar sind.

11. Hilfskraftlenkung nach einem der Ansprüche 5 bis 10,
**dadurch gekennzeichnet, dass**
ein Hydraulikspeicher (16) in die Druckmittelpumpe (1) integriert ist.

12. Hilfskraftlenkung nach einem der Ansprüche 1 bis 11,
**dadurch gekennzeichnet, dass**
die Leistung der Druckmittelpumpe (1) in Abhängigkeit der für die hydraulische Unterstützung notwendigen Leistung regelbar ist.

13. Hilfskraftlenkung nach einem der Ansprüche 1 bis 12,
**dadurch gekennzeichnet, dass**
die Kupplung (15) anhand der Druckwerte im Hydraulikspeicher (16), vorzugsweise durch einen oberen und einer unteren Druckpunkt, steuerbar ist.

14. Hilfskraftlenkung nach Anspruch 13,
**dadurch gekennzeichnet, dass**
der Druck im Hydraulikspeicher (16) bzw. die Druckmittelpumpe (1) durch die Kupplung (15) regelbar ist.

## Claims

1. Power steering system with hydraulic power assistance, in particular for motor vehicles, having
1.1 a pressure medium pump (1) for producing a hydraulic pressure for the power assistance,
1.2 a solenoid valve (2) for controlling the pressure medium flow to working spaces (3a, 3b), the solenoid valve (2) being arranged in the pressure medium pump (1), and
1.3 a motor/engine (13 or 14) for driving the pressure medium pump (1), it being possible to separate the pressure medium pump (1) from the motor/engine (13 or 14) by means of a clutch (15).

2. Power steering system according to Claim 1, **characterized in that** the clutch (15) is configured as an electromagnetic clutch.

3. Power steering system according to Claim 1 or 2, **characterized in that** the clutch (15) is integrated in the pressure medium pump (1) or arranged on the pressure medium pump (1).

4. Power steering system according to Claim 1, 2 or 3, **characterized in that** the motor/engine is configured as an internal combustion engine (14).

5. Power steering system according to one of Claims 1 to 4, **characterized in that** the solenoid valve (2) is a valve with a closed hydraulic centre.

6. Power steering system according to one of Claims 1 to 5, **characterized in that** the solenoid valve (2) is configured as a proportional solenoid valve.

7. Power steering system according to one of Claims 1 to 6, **characterized in that** it is possible to control the solenoid valve (2) via a computing unit (11), the computing unit (11) processing signals from at least one steering moment sensor (10).

8. Power steering system according to Claim 7, **characterized in that**, in order to control the solenoid valve (2), the computing unit (11) processes or senses the booster oil pressure to the working spaces (3a, 3b).

9. Power steering system according to Claim 7 or 8, **characterized in that**, in order to control the solenoid valve (2), the computing unit (11) processes additional parameters, such as driving speed, steering speed, accelerations, yaw velocity, loading state, engine speed, ESP signals, ABS signals, steering angle and driver-specific settings.

10. Power steering system according to Claim 9, **characterized in that** the additional parameters can be transmitted by a CAN bus.

11. Power steering system according to one of Claims 5 to 10, **characterized in that** a hydraulic accumulator (16) is integrated into the pressure medium pump (1).

12. Power steering system according to one of Claims 1 to 11, **characterized in that** it is possible to regulate the power of the pressure medium pump (1) as a function of the power necessary for the hydraulic assistance.

13. Power steering system according to one of Claims 1 to 12, **characterized in that** it is possible to control the clutch (15) using the pressure values in the hydraulic accumulator (16), preferably by an upper and a lower pressure point.

14. Power steering system according to Claim 13, **characterized in that** it is possible to regulate the pressure in the hydraulic accumulator (16) or the pressure medium pump (1) by the clutch (15).

## Revendications

1. Direction assistée avec servo-assistance hydraulique, notamment pour véhicules automobiles, comprenant :
1.1 une pompe à fluide sous pression (1) destinée à produire une pression hydraulique pour la servo-assistance hydraulique,
1.2 une électrovanne (2) pour la commande du courant de fluide sous pression vers les chambres de travail (3a, 3b), l'électrovanne (2) étant disposée dans la pompe à fluide sous pression (1) et
1.3 un moteur (13, respectivement 14) pour l'entraînement de la pompe à fluide sous pression (1), la pompe à fluide sous pression (1) pouvant être séparée du moteur (13, respectivement 14) au moyen d'un accouplement (15).

2. Direction assistée selon la revendication 1,
**caractérisée en ce que**
l'accouplement (15) est réalisé sous la forme d'un accouplement électromagnétique.

3. Direction assistée selon la revendication 1 ou 2,
**caractérisée en ce que**
l'accouplement (15) est intégré dans la pompe à fluide sous pression (1) ou est disposé sur la pompe à fluide sous pression (1).

4. Direction assistée selon la revendication 1, 2 ou 3,
**caractérisée en ce que**
le moteur est réalisé sous la forme d'un moteur à combustion interne (14).

5. Direction assistée selon l'une quelconque des revendications 1 à 4,
**caractérisée en ce que**
l'électrovanne (2) est une vanne avec un centre hydraulique fermé.

6. Direction assistée selon l'une quelconque des revendications 1 à 5,
**caractérisée en ce que**
l'électrovanne (2) est réalisée sous la forme d'une vanne magnétique proportionnelle.

7. Direction assistée selon l'une quelconque des revendications 1 à 6,
**caractérisée en ce que**
l'électrovanne (2) peut être commandée par une unité d'ordinateur (11), l'unité d'ordinateur (11) traitant des signaux provenant d'au moins un capteur de couple de direction (10).

8. Direction assistée selon la revendication 7,
**caractérisée en ce que**
l'unité d'ordinateur (11) pour la commande de l'électrovanne (2) traite ou détecte la pression d'huile servocommandée aux chambres de travail (3a, 3b).

9. Direction assistée selon la revendication 7 ou 8,
**caractérisée en ce que**
l'unité d'ordinateur (11) pour la commande de l'électrovanne (2) traite des paramètres supplémentaires, tels que la vitesse de conduite, la vitesse de direction, les accélérations, la vitesse de lacet, l'état de charge, le régime du moteur, les signaux ESP, les signaux ABS, l'angle de direction ainsi que les ajustements individuels du conducteur.

10. Direction assistée selon la revendication 9,
**caractérisée en ce que**
les paramètres supplémentaires peuvent être transmis par un bus CAN.

11. Direction assistée selon l'une quelconque des revendications 5 à 10,
**caractérisée en ce qu'**un
accumulateur hydraulique (16) est intégré dans la pompe à fluide sous pression (1).

12. Direction assistée selon l'une quelconque des revendications 1 à 11,
**caractérisée en ce que**
la puissance de la pompe à fluide sous pression (1) peut être réglée en fonction de la puissance nécessaire pour l'assistance hydraulique.

13. Direction assistée selon l'une quelconque des revendications 1 à 12,
**caractérisée en ce que**
l'accouplement (15) peut être commandé à l'aide des valeurs de pression dans l'accumulateur hydraulique (16), de préférence par un point de pression supérieur et inférieur.

14. Direction assistée selon la revendication 13,
**caractérisée en ce que**
la pression dans l'accumulateur hydraulique (16) respectivement dans la pompe à fluide sous pression (1) peut être réglée par l'accouplement (15).
